# EUROPEAN PATENT SPECIFICATION

(11) **EP 1 032 253 B1**
(45) Date of publication and mention of the grant of the patent: **08.09.2004**
(21) Application number: 98956081.8
(22) Date of filing: 18.11.1998
(51) Int. Cl.: A01B 61/04, A01B 63/14

(54) **AGRICULTURAL APPARATUS**
LANDWIRTSCHAFTLICHE MASCHINE
MACHINE AGRICOLE

(30) Priority: 18.11.1997 SE 9704225
(43) Date of publication of application: 06.09.2000
(73) Proprietor: Väderstad-Verken AB, 590 21 Väderstad (SE)
(72) Inventor: Stark, Crister, 59021 Väderstad (SE)
(74) Representative: Hammar, Ernst
(86) International application number: PCT/SE1998/002082
(87) International publication number: WO 1999/027766

(56) References cited:
- DE-B2- 2 814 883
- DE-C- 513 152
- DK-B- 162 912
- FR-A- 1 075 572
- FR-A1- 2 332 692
- FR-A1- 2 341 254
- GB-A- 329 756
- SE-B- 458 007
- SE-C- 181 360
- US-A- 4 204 579
- US-A- 4 608 933

## Description

The present invention relates to an agricultural machine according to the pre-characterising portion of claim 1. Such an agricultural machine is known from SE-B-458 007.

Agricultural machines, primarily machines for soil cultivation and sowing machines of various types, have for a long time had different forms of sprung working members. This applies to machines with both different forms of tines and different forms of discs, so-called disc shares.

The sprung mounting normally serves to give way when a stationary obstacle is run into and to improve ground adaptability, that is to say bring about automatic compensation when the working depth decreases or increases.

The sprung mounting is also intended to ensure that the working member vibrates during driving. The vibration contributes to earth, straw and plant remains being shaken off the working member. In many cases, the vibration is also desirable in order that the working member breaks up the earth better.

Great efforts have been made to find systems which achieve good ground adaptability and thus a precise working depth. This problem has been solved by dividing the frame into smaller sections and by providing each section with support members. Another known solution is to provide each sprung working member with support wheels. However, it has proved to be impossible to provide each sprung working member with support wheels and at the same time make all the working members work with the same force. If, moreover, a frame bearing a load of fertilizer or seed for sowing is arranged on the agricultural machine, a machine is obtained in which the frame height above the ground varies depending on how heavily loaded the machine is. This is a great inconvenience as the frame often bears other working members which have different conditions of action in the ground. The rebound of the working member is also affected by the driving speed as the earth resistance increases at increased driving speed.

Swedish patent SE-C-181 360 discloses an agricultural implement which comprises a number of share arms which are each mounted rotatably on a shaft on a frame. The share arms are interconnected in pairs by means of rods or links and to a swingle-tree. When one share arm collides with a stone, it is pivoted backwards, the other share arm then being pivoted forwards by means of the rods and the swingle-tree. This arrangement means that the risk is low that both share arms will simultaneously collide with an obstacle in the ground.

German patent DE-C-587 804 relates to an agricultural implement which comprises a number of share arms which are joined together by means of a rope. The rope runs via blocks arranged on each share arm and a block arranged on a lever. The lever is articulated on the one hand in a frame for the agricultural implement and on the other hand to a towing arrangement for the implement. When, for example, a tractor tows the agricultural implement, the lever 9 will tension the rope, so that the share arms will adopt an end position against a stop. If a share arm collides with a stone in the ground, the share arm is rotated backwards in the direction away from the tractor. The lever will then also be rotated backwards in order to relieve the load on the rope. The other share arms are not affected.

The object of the present invention is to produce an agricultural machine of the type indicated in the introduction, the working members of which absorb an essentially equal force against the ground.

Another object is to produce an agricultural machine, the working members of which essentially follow the shape of the ground.

A further object is to produce an agricultural machine, the position of which above the ground is independent of its weight.

Yet another object is to produce an agricultural machine, the working members of which are not affected by the speed of the machine.

This is achieved by the present invention by virtue of the fact that said working members are interconnected by means of elongate connecting parts which transmit movement and distribute force from one of said working members to another of said working members, so that when one of said working members moves from an initial position in one direction under the action of a force, another of said working members moves in another direction under the action of this force. The invention is characterized by the features of claim 1.

By virtue of the fact that the working members are connected by elongate connecting parts, such as a rope, the average setting of the working members remains unchanged under different load conditions, which affords the possibility of loading the machine with, for example, different types and sizes of seed containers without the height of the chassis part above the ground being changed. As a consequence of this, the agricultural machine offers a high degree of ground adaptability, which means that the working depth in the ground can be kept at an essentially constant level for all the working members irrespective of the type of ground or the driving speed.

The invention is described in greater detail below with reference to exemplary embodiments shown in the appended figures, in which
Fig. 1 is a perspective view of an agricultural machine according to a first exemplary embodiment of the present invention, which is provided with a seed container and is towed by a tractor,
Fig. 2 is a perspective view of the agricultural machine according to the first exemplary embodiment, in which the components of the machine are shown in greater detail,
Fig. 3 is a side view of the agricultural machine according to the first exemplary embodiment,
Fig. 4 is a side view of an agricultural machine according to a second exemplary embodiment,
Fig. 5 is a side view of an agricultural machine according to a third exemplary embodiment,
Fig. 6 is a side view of an agricultural machine according to a fourth exemplary embodiment,
Fig. 7 is a side view of an agricultural machine according to a fifth exemplary embodiment,
Fig. 8 is a top view of the agricultural machine according to the fifth exemplary embodiment,
Fig. 9 is a detailed view from above of the agricultural machine according to the fifth exemplary embodiment,
Fig. 10 is a perspective view of an agricultural machine according to a sixth exemplary embodiment,
Figs 11 and 12 are detailed views of the agricultural machine according to the sixth exemplary embodiment,

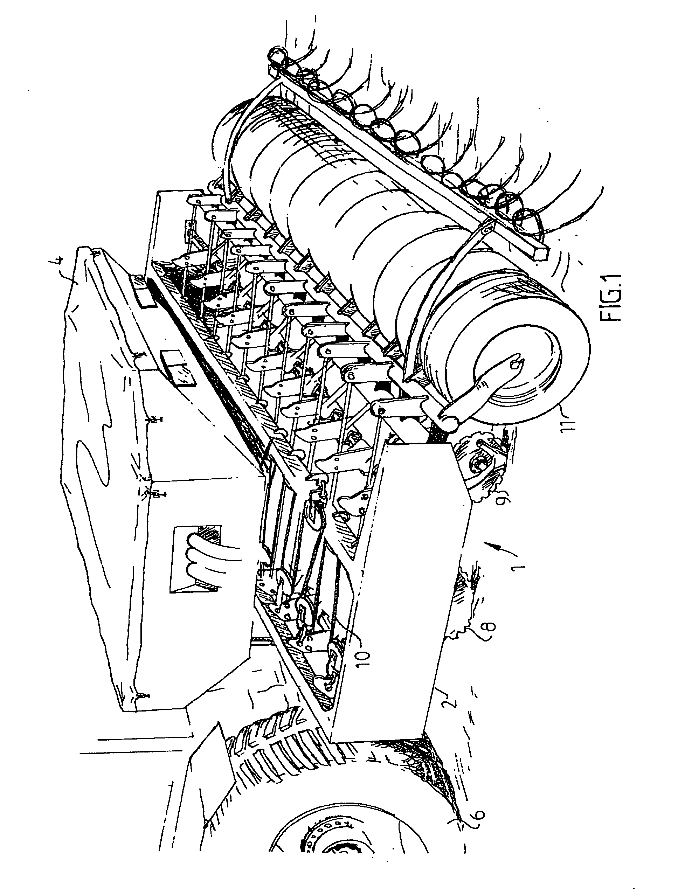

Fig. 1 shows an agricultural machine 1 according to a first exemplary embodiment. The machine 1 comprises a chassis part 2 which forms a frame 2 for the components included in the machine. Fig. 1 indicates that a seed container 4 is arranged on the frame 2. The agricultural machine 1 is coupled to a tractor 6 in a conventional manner, which means that the tractor 6 tows the machine 1 over the ground.

A number of working members in the form of disc shares 8, 9 are arranged side by side and interconnected by means of an elongate connecting part in the form of a rope 10, which will be described in greater detail below. As shown in Fig. 1, two rows of disc shares 8, 9 are arranged parallel to one another. Arranged parallel to the two rows of disc shares 8, 9 is a row of support wheels 11.

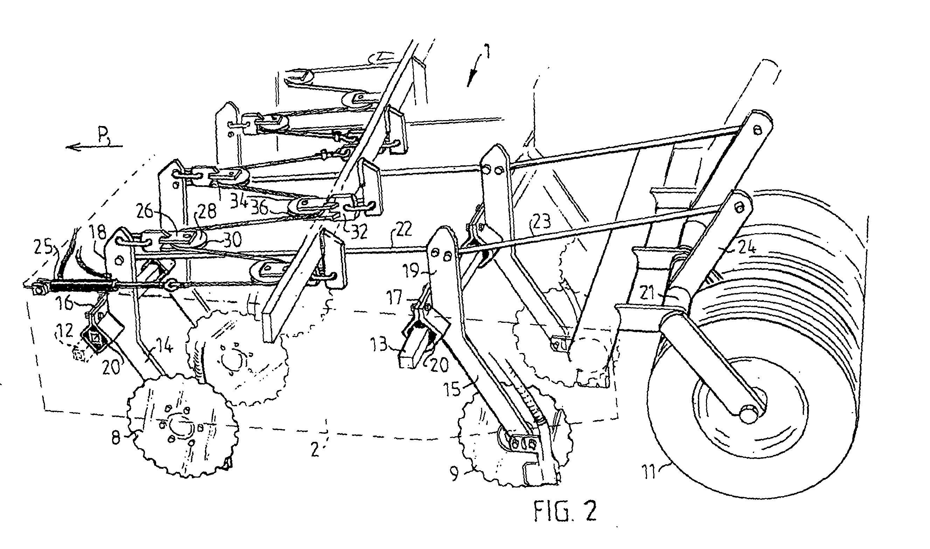

Fig. 2 shows the agricultural machine 1 according to the first exemplary embodiment in greater detail. The first row of disc shares 8 is arranged on a first shaft 12 connected to the frame 2. The second row of disc shares 9 is arranged on a second shaft 13 connected to the frame 2. Each disc share 8, 9 is mounted on a leg 14, 15 which is arranged rotatably on the respective shaft 12, 13 by means of a split sleeve 16, 17. Arranged on the leg 14, 15 and the sleeve 16, 17 is an arm 18, 19 which extends in a direction essentially away from the disc share 8 and the leg 14. In the exemplary embodiment shown in Fig. 2, the first and second shafts 12, 13 have an essentially square cross section. The split sleeve 16, 17 also has an essentially square cross section. The split sleeve 16, 17 is displaced in the circumferential direction in such a manner that four interspaces are formed, in which springing members 20 in the form of rod-shaped rubber elements are arranged. The rubber rods contribute to the disc shares striving to adopt an initial position.

In the exemplary embodiment shown, the number of disc shares 8 on the first shaft 12 is the same as the number of disc shares 9 on the second shaft 13 and also the same as the number of support wheels 11. The support wheels 11 are arranged on a third shaft 21 which extends essentially parallel to the first and second shaft 12, 13. Seen in the direction of travel, indicated by an arrow P in Fig. 2, of the machine 1, each disc share 8, 9 and support wheel 11 is located on a line. The disc shares 8, 9 and support wheels 11 that are located on the same line in the direction of travel are interconnected in an articulated manner by means of first and second link stays 22, 23. The first link stay 22 connects the anns 18, 19 on the two disc shares 8, 9 arranged around the first and second shaft 12, 13. The second link stay 23 connects the arm 19 of the disc share 9 arranged on the second shaft 13 and an arm 24 arranged on the support wheel 11. It is possible for the support wheels 11 to be arranged with a bogie.

At the free end of each arm 18 of the disc shares 8 arranged around the first shaft 12, a block 26 is arranged, which comprises a bearing-mounted pulley 28, the periphery of which has a circumferential groove 30. The blocks 26 arranged on the arms 18 together form a first set of blocks 26 which are intended to interact with a second set of blocks 32 arranged on the frame 2, which have a bearing-mounted pulley 34 with a circumferential groove 36, via the rope 10 which runs via each block 26, 32 in the peripheral groove 30, 36 arranged in the respective pulley 28, 34. The ends of the rope 10 are connected firmly to the frame 2.

If the agricultural machine 1 happens to pass over, for example, a rise in the ground, the disc share(s) 8, 9 making contact with the rise is (are) pushed upwards. This means that the distance between the blocks 26 arranged on the arm 18 of the disc shares 8 that are acted on by the rise and the second set of blocks 32 arranged on the frame 2 will increase. On account of the fact that the rope 10 is tensioned firmly in the frame 2 and that the rope 10 is essentially inelastic, the distance between the blocks 26 arranged on the arm 18 of the disc shares 8 that are not affected by the rise and the second set of blocks 32 arranged on the frame 2 will decrease. This results in the disc shares 8, 9 that are not affected by the rise being pulled in the direction towards the ground by the rope 10. As the disc shares 8, 9 on the first and second shaft 12, 13 and also the support wheels 11 are connected by means of the first and second link stays 22, 23, the corresponding disc share 9 on the second shaft 13 and the corresponding support wheel 11 will also follow the movement of the disc share 8 on the first shaft 12.

In order to increase the stability of the agricultural machine 1 in the lateral direction, the rope 10 can be divided approximately half way along the length of the rope 10, so that the disc shares 8, 9 on one side of the agricultural machine 1 interact via one part of the divided rope 10 and the disc shares 8, 9 on the other side of the agricultural machine 1 interact via the other part of the divided rope 10. The ends of the rope 10 are connected on the one hand to the frame 2 at the sides of the agricultural machine 1 and on the other hand to a central region of the frame 2, which is shown in Fig. 2.

An adjustable force member, in the form of a hydraulic cylinder 25 or a spring, can be arranged on the rope 10. By means of a hydraulic cylinder 25, the force in the rope 10 can be regulated and also a vibration can be generated in the rope 10. Vibrations are then generated in the disc shares 8, 9, which shakes off earth, straw and other plant remains which have stuck to the disc shares 8, 9.

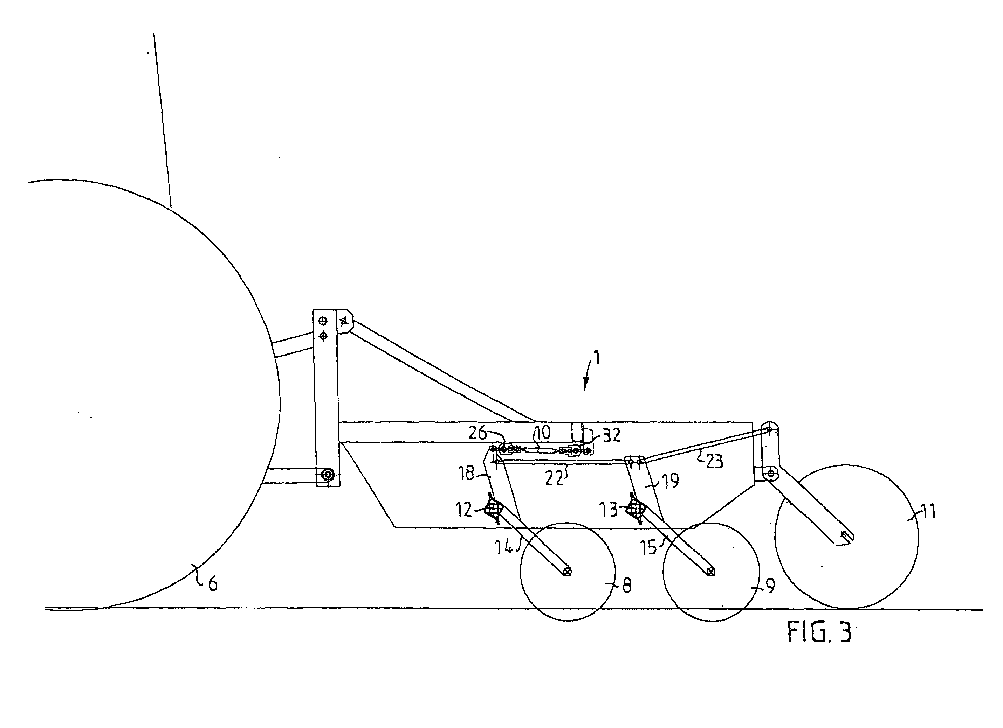

Fig. 3 shows a side view of the agricultural machine 1 according to the first exemplary embodiment. A tractor 6 is arranged so as to tow the agricultural machine 1 on the ground. The disc shares 8, 9 arranged around the first and second shafts 12, 13 are located at a given depth below the surface of the ground, which depth can be adjusted by interaction between the support wheels 11 and the towing coupling of the tractor. The arrangement for this adjustment is previously known per se and is therefore not shown in Fig. 3.

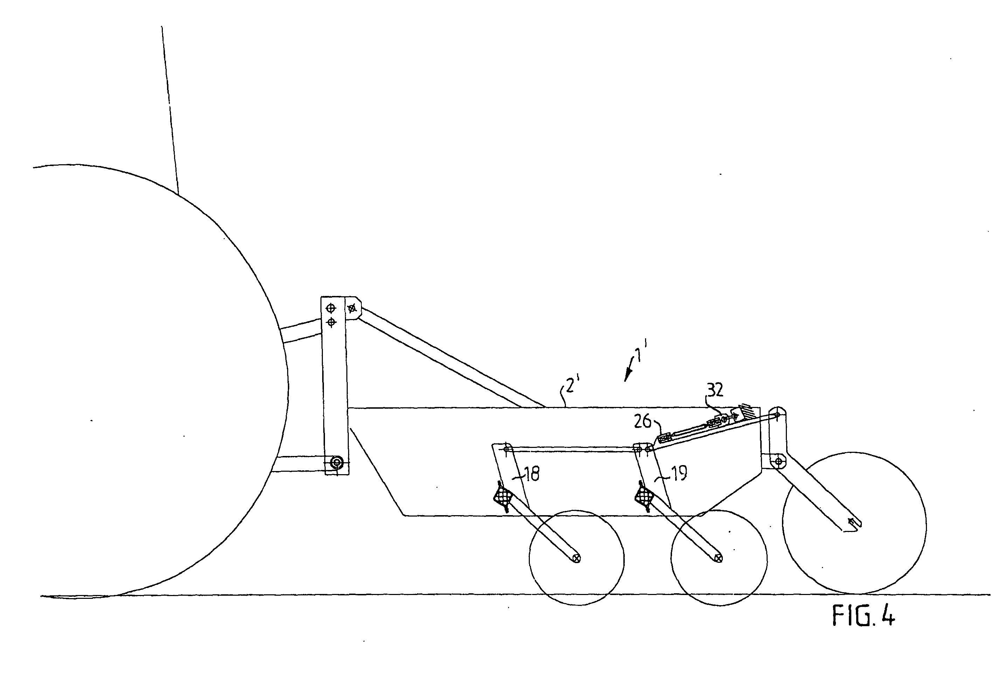

Fig. 4 shows a side view of an agricultural machine 1' according to a second exemplary embodiment. This embodiment is very reminiscent of the first embodiment but differs in that the first set of blocks 26 are arranged on the arms 19 instead of on the arms 18 and also in that the second set of blocks 32 are arranged on the frame 2' at a fastening point located in the rear region of the agricultural machine 1'.

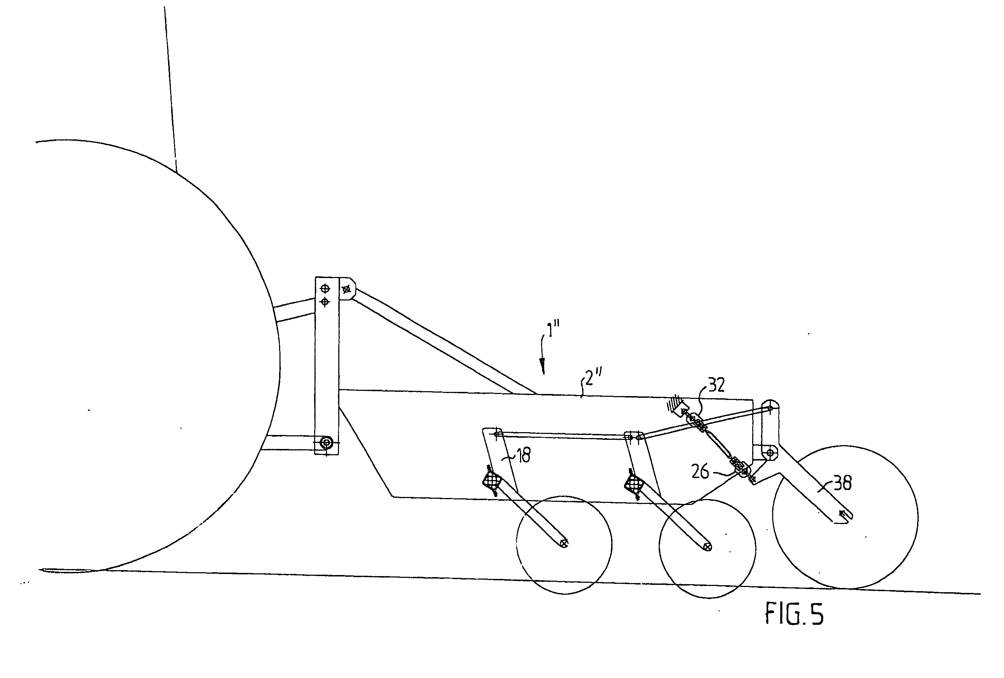

Fig. 5 shows a side view of an agricultural machine 1" according to a third exemplary embodiment. This embodiment is also very reminiscent of the first embodiment but differs in that the first set of blocks 26 are arranged on a projection on a leg 38 of the support wheel 11 instead of on the arms 18 and also in that the second set of blocks 32 are arranged on the frame 2" at a fastening point located in the rear region of the agricultural machine 1".

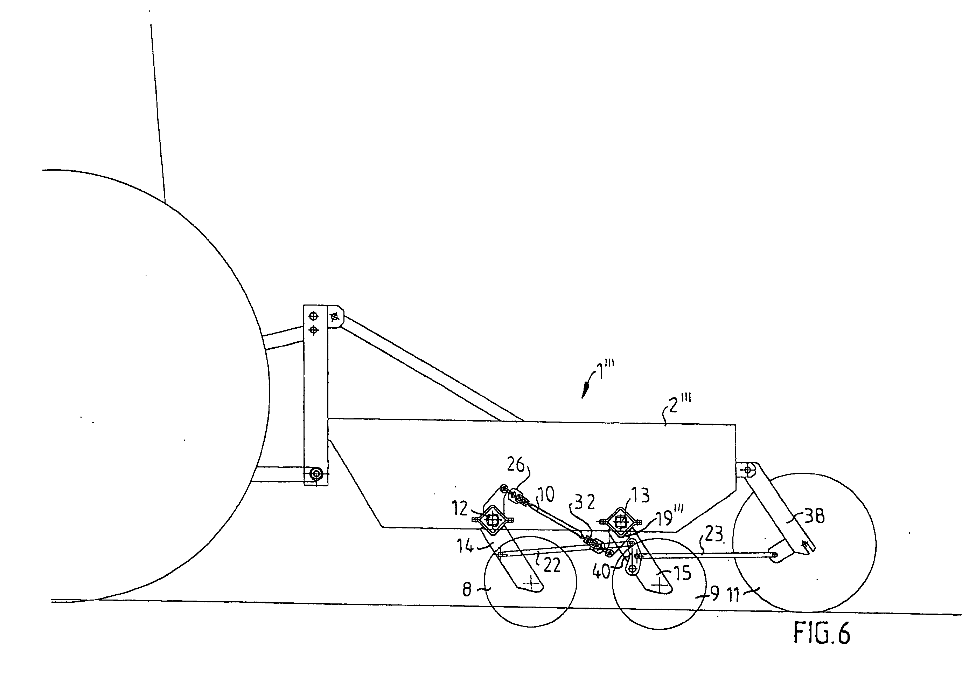

Fig. 6 shows a side view of an agricultural machine 1''' according to a fourth exemplary embodiment. According to this embodiment, the first and second link stays 22, 23 connect the legs 14, 15 of the disc shares 8, 9 and the leg 38 of the support wheel 11. A link arm 40 is arranged on the leg 15 of the disc share 9 arranged rotatably around the second shaft 13. The second set of blocks 32 are arranged on an arm 19''' of the respective disc share 9 arranged on the second shaft 13. The arm 19''' preferably extends in a direction which essentially coincides with the direction of extension of the respective leg 15. With the link stays 22, 23, the link arm 40 and the blocks 26, 32 connected together according to this embodiment, the disc shares 8, 9 and the support wheels 11 that are located on the same line in the direction of travel are permitted to move relative to one another.

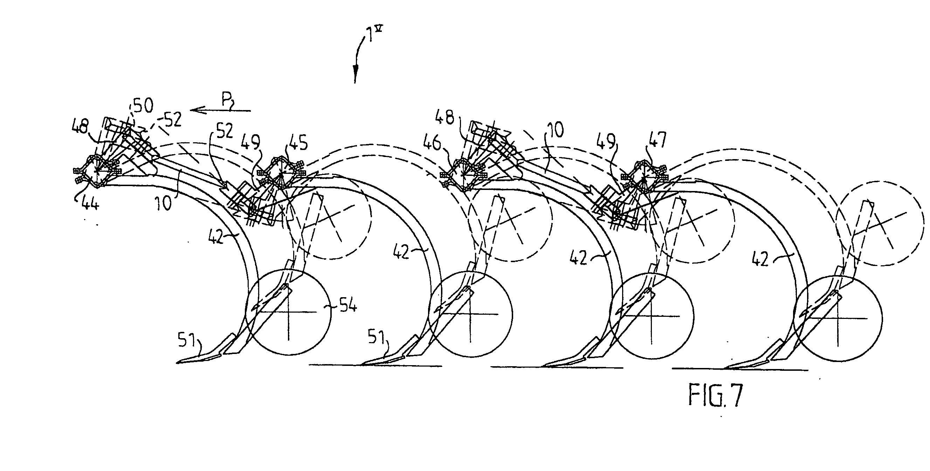

Fig. 7 shows a side view of an agricultural machine 1^{IV} according to a fifth exemplary embodiment. In this case, the working members consist of sowing tines 42 arranged side by side on a number of parallel shafts 44, 45, 46, 47. Another name for a sowing tine 42 is a cultivator tine. According to the exemplary embodiment shown, four parallel shafts 44-47 are arranged in a row one following another. The agricultural machine 1^{IV} is intended to be towed by, for example, a tractor (not shown in Fig. 5) in the direction of the arrow P. As in the preceding exemplary embodiments, the sowing tines 42 are rotatable around the shafts 44-47. Rubber dampers are preferably also arranged between a split sleeve arranged around the shaft 44-47 and the shaft, as described in connection with Fig. 2.

An arm 48, 49 is arranged on each sowing tine 42. Each arm 48, 49 comprises a guide element for a rope 10, in the form of a bearing-mounted pulley 50, the periphery of which has a circumferential groove 52. The arm 48 on each sowing tine 42 mounted rotatably on a first shaft 44 at the very front in the direction of travel of the agricultural machine 1^{IV} is arranged above the shaft 44, seen from the side of the agricultural machine 1^{IV} in Fig. 7. The arm 49 on each sowing tine 42 mounted rotatably on a second shaft 45 seen in the direction of travel of the agricultural machine 1^{IV} is arranged below the shaft 45, seen from the side of the agricultural machine 1^{IV} in Fig. 7.

A rope 10 runs via the pulleys 50 arranged on the arms 48, 49, which rope 10 transmits movement and distributes force between the sowing tines 42 arranged on the shafts 44-47. If, for example, one of the sowing tines 42 on the first shaft 44 passes over a rise in the ground, this sowing tine 42 will move upwards, that is to say in the counterclockwise direction in Fig. 7. The pulley 50 bearing-mounted on the arm 48, 49 will then tension the rope 10, so that the other sowing tines 42 arranged on the first and second shaft 44, 45 will be rotated in the clockwise direction around the first and second shaft 44, 45. The sowing tines 42 on the third and fourth shafts 46, 47 interact in the same way as described for the sowing tines 42 on the first and second shafts 44, 45.

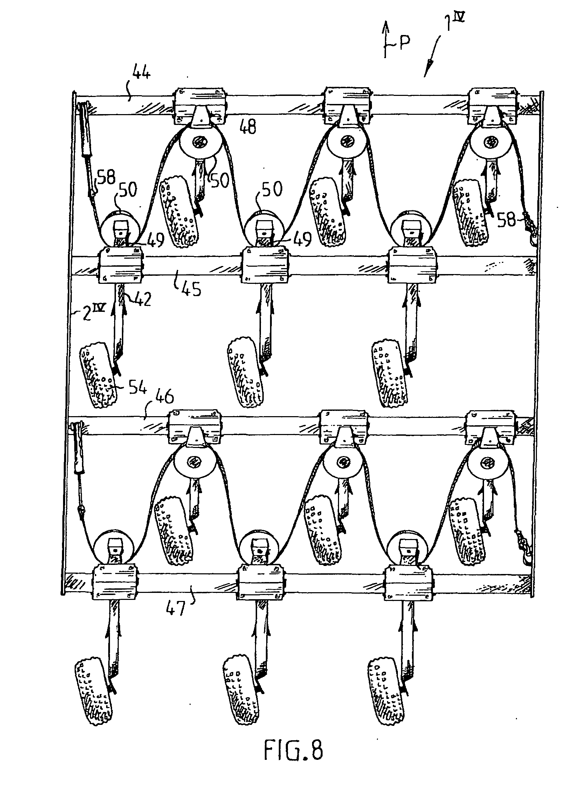

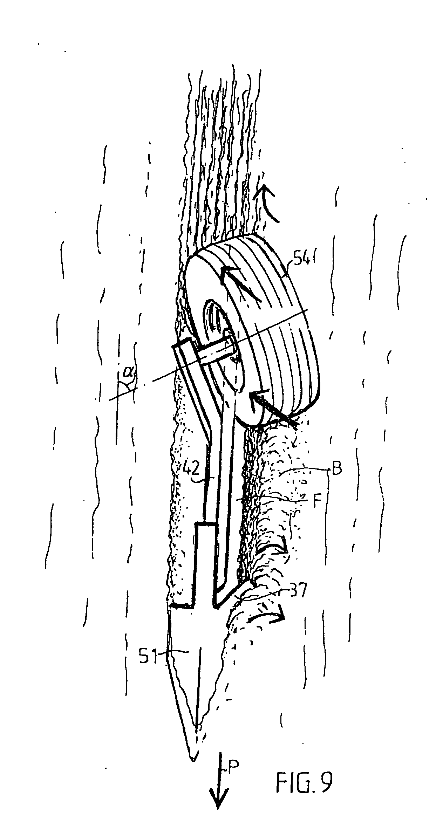

In order further to improve the ground adaptability and to close the furrow formed in the ground by the respective sowing tine 42, a support wheel 54 can be arranged on each sowing tine 42. The dotted lines in Fig. 7 show the sowing tines 42 and the support wheels 54 in an angled-up position, which can result if a rise in the ground is passed over, as described above. The sowing tines 42 are provided with a share 51. For sowing, the share 51 can be designed in such a manner, for example asymmetrically with a projection 37, that an earth bank B is produced on one side of the furrow F formed by the share 51 on the sowing tine 42. The support wheel 54 arranged on the respective sowing tine 42 will then interact with the sowing tine 42, so that the earth bank B is levelled and fills in the furrow F again, and so that the support wheel 54 presses down on the filled-in furrow F. This is achieved by virtue of the fact that the axis of rotation of the support wheel 54 is inclined at an oblique angle α in relation to the direction of travel, as is best shown in a top view in Figures 8 and 9. By virtue of the fact that the support wheel 54 rolls at an angle in relation to the direction of travel, the support wheel 54 will automatically clean itself in wet conditions when the earth is sticky. The sowing depth, that is to say the depth at which the share 51 will be set by making the support wheel 54 adjustable along the sowing tine 42. The angle of the support wheel 54 in relation to the direction of travel can be adjustable. The distance of the support wheel 54 from the sowing tine 42 can also be adjustable.

Fig. 8 shows a top view of the agricultural machine 1^{IV} according to the fifth exemplary embodiment. The rope 10 runs zigzag via the pulleys 50 arranged on respective arms in such a manner that the rope 10 is at one end 56 connected to in a frame 2^{IV} of the agricultural machine 1^{IV} and runs via the pulley 50 on the arm 49 of the sowing tine 42 arranged on the second shaft 45. The rope 10 then continues to the pulley 50 arranged on the arm 48 of the sowing tine 42 arranged on the first shaft 44, and then on to the pulley 50 of an arm 49 of a sowing tine 42 arranged next to the first-mentioned sowing tine 42 on the second shaft 45 etc., finally being anchored by its other end 58 in the frame 2^{IV}. As shown in Fig. 8, the sowing tines 42 on the first and second shaft 44, 45 are not arranged on a line, seen in the direction of travel of the agricultural machine 1^{IV}.

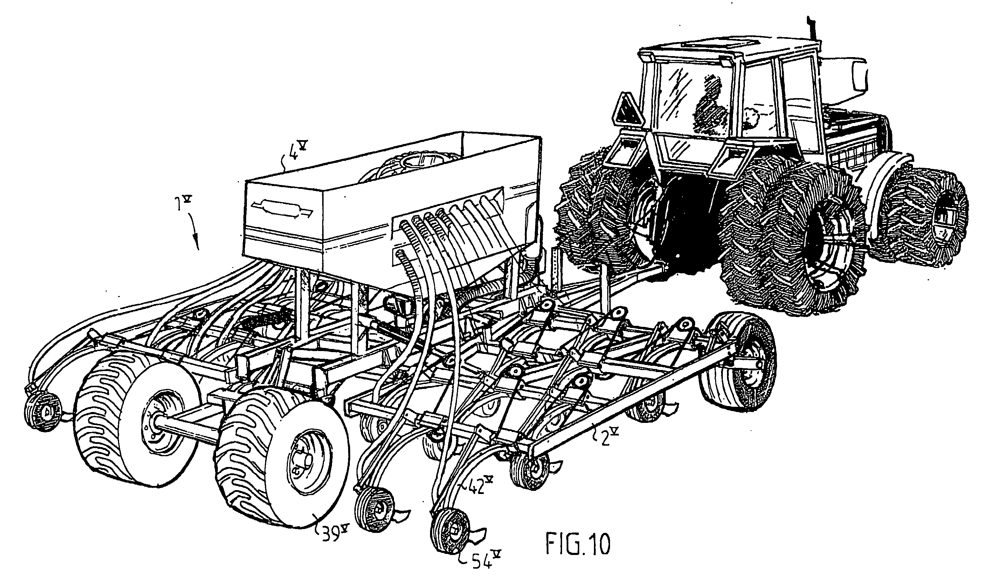

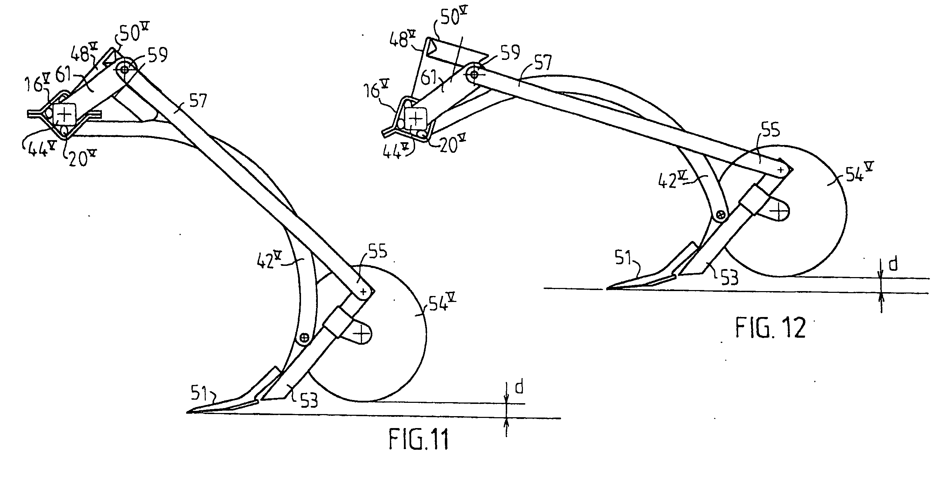

Fig. 10 shows a perspective view of an agricultural machine 1^{V} according to a sixth exemplary embodiment. The agricultural machine 1^{V} comprises a seed container 4^{V} arranged on a frame 2^{V} of the agricultural machine 1^{V}. At the rear end of the frame 2^{V}, two wheels 39^{V} are arranged. On each side of a central part of the frame 2^{V}, which supports the seed container 4^{V}, two manoeuvrable frame parts 2^{V} are arranged, which are very reminiscent of the agricultural machine 1^{IV} according to the fifth embodiment but differ in that each working member in the form of sowing tines 42^{V} is provided with a parallel guide from the frame 2^{V}, which will be described in greater detail with the aid of Figures 11 and 12.

In sowing, the requirement for accuracy is great, the objective being to plant the seed at a depth measured from the surface of the ground of approximately 1-5 cm depending on the type of crops. The variation in depth between different seeds that are planted during the same sowing is to be minimal; less than 0.5 cm is desirable. As the surface of the ground is often uneven and the agricultural machine 1^{V} works over a great width, each individual sowing tine 42^{V} must be compensated for unevennesses in the surface of the ground if a constant sowing depth is to be obtained.

Figures 11 and 12 shows detailed views of the sowing tines 42^{V} according to the sixth exemplary embodiment shown in Fig. 10. The sowing tine 42^{V}, which has a leg 14^{V}, is arranged rotatably around a shaft 44^{V} by means of a split sleeve 16^{V} which accommodates damping members 20^{V} in the form of rubber rods, as described in the exemplary embodiment according to Fig. 2. An arm 48^{V}, which at an outer end has a bearing-mounted pulley 50^{V} for a rope 10, is also arranged on the split sleeve 16^{V}. At that end of the sowing tine 42^{V} which faces away from the sleeve 16^{V}, a cultivating member in the form of a share 51 is connected in an articulated manner on the sowing tine 42^{V}. The share 51 can be of, for example, the goose-foot type, which share 51 strives to travel at the correct angle and thus requires minimum towing force. Also arranged on the share 51 is a sowing tube 53, on which a support wheel 54^{v} is adjustably arranged. At that end of the sowing tube 53 which faces away from the surface of the ground, a first end 55 of a parallel stay 57 is connected in an articulated manner. A second end 59 of the parallel stay 57 is connected in an articulated manner to a lever 61 connected firmly to the shaft 44^{V} around which the split sleeve 16^{V} is arranged.

Fig. 11 shows the agricultural machine 1^{V} in a normal position above the surface of the ground. If a rise in the surface of the ground is encountered, the sowing tine 42^{V} will rotate in the counterclockwise direction around the shaft 44^{V}. As the lever 61 is connected firmly to the shaft 44^{V}, the lever 61 will not be rotated around the shaft 44^{V}, which means that the parallel stay 57 will transmit a movement to the sowing tube 53 which in turn moves at an angle and adjusts the share 51 in relation to the sowing tine 42^{V} in order that the sowing depth is maintained.

In order to set the desired sowing depth d for the respective sowing tine 42^{V}, the parallel stay 57 can, for example, be length-adjustable (not shown) or the support wheel 54 can be moved along the sowing tube.

According to the exemplary embodiments shown above, the elongate connecting part 10 can comprise a rope, steel wire rope, carbon fibre rope, chain, chain cable or the like.

## Claims

1. Agricultural machine comprising at least two working members (8, 9, 42-42^{v}, 86), such as sowing, ploughing or harrowing bodies, being arranged rotatably on a chassis part (2-2^{v}) and substantially beside one another, wherein support wheels (11, 54, 100) are provided for determining the depth of said working members (8, 9, 42-42^{v}, 86) in the earth, each support wheel (11, 54, 100) being connected to one or more of said working members (8, 9, 42-42^{v}, 86), spring members (20-20^{v}, 84) being arranged between said working members (8, 9, 42-42^{v}, 86) and a shaft (12, 13, 44-47, 87) on which the working members (8, 9, 42-42^{v}, 86) are rotatable, said spring members (20-20^{v}, 84) having a controlling effect and striving to guide said working members (8, 9, 42-42^{v}, 86) into a state of equilibrium, **characterised in that** a flexible connecting part (10) acts directly or indirectly on said support wheels (11, 54, 100), **in that** working members (8, 9, 42-42^{v}, 86) are directly or indirectly interconnected by means of said elongate flexible connecting part (10) for transmitting movement and distributing force from one of said working members (8, 9, 42-42^{v}, 86) to another of said working members (8, 9, 42-42^{v}, 86), so that when one of said working members (8, 9, 42-42^{v}, 86) moves from an initial position in one direction under the action of a force, another of said working members (8, 9, 42-42^{v}, 86) moves in another direction under the action of said force.

2. Agricultural machine according to Claim 1, wherein the flexible connecting part (10) at its respective end rigidly or regulatably is connected to the chassis part (2-2^{v}).

3. Agricultural machine according to claim 1 or 2, wherein the flexible connecting part (10) at its respective end is connected to an adjustable force member (25), such as a hydraulic cylinder or a spring.

4. Agricultural machine according to any one of the preceding claims, wherein the flexible connecting part (10) comprises a rope, a steel wire rope, a carbon fibre rope, a chain or a chain cable.

5. Agricultural machine according to Claim 4, wherein a guide element (28, 50, 50^{v}) in the form of a pulley (28, 50, 50^{v}), via which the flexible connecting part (10) runs, is arranged on said working members (8, 9, 42-42^{v}, 86).

6. Agricultural machine according to Claim 5, wherein two or more working members (42) arranged on respective shafts (44, 47) interact by means of the flexible connecting part (10) running via guide elements (50), so that when one working member (42) is rotated in one direction, the other working members are rotated in the opposite direction.

7. Agricultural machine according to any one of the preceding claims, wherein the chassis part (2-2^{v}) includes a frame (2-2^{v}) which comprises said at least one shaft (12, 13, 44-47).

8. Agricultural machine according to Claim 7, wherein two working members (8, 9) arranged on respective shafts (12, 13) are interconnected in an articulated manner by means of a link stay (22).

9. Agricultural machine according to Claim 8, wherein said two working members (8, 9) arranged on respective shafts (12, 13) are also, preferably by means of a link stay (23), interconnected in an articulated manner to a wheel (11) which is arranged on a third shaft (21) which extends essentially parallel to the respective shafts (12, 13).

10. Agricultural machine according to any of the preceding claims, wherein the working member comprises a leg (42^{v}; 98) being arranged rotatably on the shaft (44^{v}), a cultivating member (51, 53; 84, 86) being connected in an articulated way to the leg (42^{v}; 98) at the end of the leg (42^{v}; 98) facing away form said shaft (44^{v}) and wherein a parallel stay (57; 92) at a first end (55; 91) is connected in an articulated way to the cultivating member (51, 53; 84, 86) and at a second end (59; 93) is connected in an articulated way to the shaft (44^{v}).

11. Agricultural machine according to Claim 10, wherein a sowing tube (53) is connected firmly to the cultivating member (51) and connected in an articulated manner to the parallel stay (57) at the first end (55) of the parallel stay (57), and in that a lever (61) is connected firmly to the shaft (44^{v}) and connected in an articulated manner to the parallel stay (57) at the second end (59) of the parallel stay (57).

12. Agricultural machine according to Claim 11, wherein a support wheel (54^{v}) is adjustably arranged on the sowing tube (53).

13. Agricultural machine according to any of Claims 1-7, wherein the axis of rotation of the wheel (54) is arranged at an oblique angle (α) in relation to the direction of travel (P) of the agricultural machine (1), so that the wheel (54) rolls at an angle in relation to the direction of travel (P).

14. Agricultural machine according to Claim 13, wherein working member (42) is designed asymmetrically in relation to the direction of travel (P), so that the working member (42) produces a bank (B) on one side of the furrow (F) formed in the ground by the working member (42), and wherein the wheel (54) is arranged so as to level the bank (B) and fill in the furrow (F) again.

15. Agricultural machine according to any of the preceding claims, wherein the spring members (20-20^{v}) comprise bar-shaped rubber elements which are arranged between the shaft (12, 13, 44-47) and a sleeve (16, 17) which is arranged around the shaft (12, 13, 44-47) and bears said working members (8, 9, 42-42^{v}), which rubber elements extend parallel to the shaft (12, 13, 44-47).

## Patentansprüche

1. Landwirtschaftliche Maschine, umfassend zumindest zwei Arbeitselemente (8, 9, 42-42^{v}, 86) wie Saat-, Pflug- und Egggeräte, die drehbar auf einem Chassisteil (2-2^{v}) und im wesentlichen nebeneinander angeordnet sind, wobei Stützräder (11, 54, 100) zum Festlegen der Tiefe der Arbeitselemente (8, 9, 42-42^{v}, 86) in der Erde vorgesehen sind und jedes Stützrad (11, 54, 100) mit einem oder mehreren der Arbeitselemente (8, 9, 42-42^{v}, 86) verbunden ist und zwischen den Arbeitselementen (8, 9, 42-42^{v}, 86) und einem Schaft (12, 13, 44-47, 87), auf dem die Arbeitselemente (8, 9, 42-42^{v}, 86) drehbar sind, Federelemente (20-20^{v}, 84) angeordnet sind, wobei die Federelemente (20-20^{v}, 84) einen steuernden Effekt haben und danach streben, die Arbeitselemente (8, 9, 42-42^{v}, 86) in einen Gleichgewichtszustand zu überführen,
**dadurch gekennzeichnet, dass** ein flexibles Verbindungsteil (10) direkt oder indirekt auf die Stützräder (11, 54, 100) wirkt, dass die Arbeitselemente (8, 9, 42-42^{v}, 86) direkt oder indirekt vermittels des länglichen flexiblen Verbindungsteils (10) zum Übertragen einer Bewegung und einer Verteilungskraft von einem der Arbeitselemente (8, 9, 42-42^{v}, 86) auf ein anderes der Arbeitselemente (8, 9, 42-42^{v}, 86) miteinander verbunden sind, so dass, wenn eines der Arbeitselemente (8, 9, 42-42^{v}, 86) sich unter der Wirkung einer Kraft aus einer Anfangsposition in eine Richtung bewegt, ein anderes der Arbeitselemente (8, 9, 42-42^{v}, 86) sich unter der Wirkung der Kraft in eine andere Richtung bewegt.

2. Landwirtschaftliche Maschine gemäß Anspruch 1, wobei das flexible Verbindungsteil (10) an seinem entsprechenden Ende starr oder regulierbar mit dem Chassisteil (2-2^{v}) verbunden ist.

3. Landwirtschaftliche Maschine gemäß Anspruch 1 oder 2, wobei das flexible Verbindungsteil (10) an seinem entsprechenden Ende mit einem einstellbaren Kraftelement (25), wie einem Hydraulikzylinder oder einer Feder, verbunden ist.

4. Landwirtschaftliche Maschine gemäß einem der vorstehenden Ansprüche, wobei das flexible Verbindungsteil (10) ein Seil, ein Stahldrahtseil, ein Kohlenfaserseil, eine Kette oder ein Kettenkabel umfasst.

5. Landwirtschaftliche Maschine gemäß Anspruch 4, wobei ein Führungselement (28, 50, 50^{v}) in Form einer Umlenkrolle (28, 50, 50^{v}), über die das flexible Verbindungsteil (10) läuft, auf den Arbeitselementen (8, 9, 42-42^{v}, 86) angeordnet ist.

6. Landwirtschaftliche Maschine gemäß Anspruch 5, wobei zwei oder mehr auf entsprechenden Schäften (44, 47) angeordnete Arbeitselemente (42) vermittels des über die Führungselemente (50) laufenden Verbindungsteils (10) so wechselwirken, dass, wenn ein Arbeitselement (42) in einer Richtung rotiert wird, die anderen Arbeitselement e in die entgegengesetzte Richtung rotieren.

7. Landwirtschaftliche Maschine gemäß einem der vorstehenden Ansprüche, wobei das Chassisteil (2-2^{v}) einen Rahmen (2-2^{v}) enthält, der zumindest einen Schaft (12, 13, 44-47) umfasst.

8. Landwirtschaftliche Maschine gemäß Anspruch 7, wobei die auf zwei oder mehr auf entsprechenden Schäften (12, 13) angeordneten Arbeitselemente (8, 9) in einer angelenkten Weise mittels einer Verbindungsstütze (22) miteinander verbunden sind.

9. Landwirtschaftliche Maschine gemäß Anspruch 8, wobei die auf zwei oder mehr auf entsprechenden Schäften (12, 13) angeordneten Arbeitselemente (8, 9) auch, vorzugsweise mittels einer Verbindungsstütze (23), in einer angelenkten Weise mit einem Rad (11) verbunden sind, das auf einem dritten Schaft (21) angeordnet ist, der sich im wesentlichen parallel zu den entsprechenden Schäften (12, 13) erstreckt.

10. Landwirtschaftliche Maschine gemäß einem der vorstehenden Ansprüche, wobei das Arbeitselement ein drehbar auf dem Schaft (44^{v}) angeordnetes Bein (42^{v}, 98) umfasst, wodurch ein Kultivierungselement (51, 53; 84, 86) in einer angelenkten Weise mit dem Bein (42^{v}, 98) an dem Ende des Beins (42^{v}, 98), das von Schaft (44^{v}) weg weist, verbunden ist, und eine parallele Stütze (57; 92) an einem ersten Ende (55; 91) in einer angelenkten Weise mit dem Kultivierungselement (51, 53; 84, 86) verbunden ist und an einem zweiten Ende (59; 93) in einer angelenkten Weise mit dem Schaft (44^{v}) verbunden ist.

11. Landwirtschaftliche Maschine gemäß Anspruch 10, wobei eine Saatröhre (53) fest mit dem Kultivierungselement (51) verbunden ist und in einer angelenkten Weise mit der parallelen Stütze (67) am ersten Ende (55) der parallelen Stütze (57) verbunden ist, und ein Hebel (61) fest mit dem Schaft (44^{v}) verbunden ist und in einer angelenkten Weise mit der parallelen Stütze (57) am zweiten Ende (59) der parallelen Stütze (57) verbunden ist.

12. Landwirtschaftliche Maschine gemäß Anspruch 11, wobei ein Stützrad (54^{v}) einstellbar auf der Saatröhre (53) angeordnet ist.

13. Landwirtschaftliche Maschine gemäß einem der Ansprüche 1 - 7, wobei die Drehachse des Rads (54) unter einem schiefen Winkel (α) in Bezug auf die Bewegungsrichtung (P) der landwirtschaftlichen Maschine (1) angeordnet ist, so dass das Rad (54) unter einem Winkel in Bezug auf die Bewegungsrichtung (P) rollt.

14. Landwirtschaftliche Maschine gemäß Anspruch 13, wobei das Arbeitselement (42) asymmetrisch in Bezug auf die Bewegungsrichtung (P) entworfen ist, so dass das Arbeitselement (42) eine Böschung auf einer Seite der von dem Arbeitselement (42) im Boden gebildeten Furche (F) erzeugt und das Rad (54) so angeordnet ist, das es die Böschung (B) einebnet und die Furche (F) wieder füllt.

15. Landwirtschaftliche Maschine gemäß einem der vorstehenden Ansprüche, wobei die Federelemente (20-20^{v}) stangenförmige Gummielemente umfassen, die zwischen dem Schaft (12, 13, 44-47) und einer Muffe (16, 17), die um den Schaft (12, 13, 44-47) angeordnet ist und die Arbeitselemente (8, 9, 42-44^{v}) lagert, angeordnet sind, wobei sich die Gummielemente parallel zum Schaft (12, 13, 44-47) erstrecken.

## Revendications

1. Machine agricole comprenant au moins deux organes de travail (8, 9, 42-42^{v}, 86), tels que des corps d'ensemencement, de labourage ou de hersage, placés à rotation sur une partie châssis (2-2^{v}) et sensiblement les uns à côté des autres, dans laquelle des roues de support (11, 54, 100) sont prévues pour déterminer la profondeur desdits organes de travail (8, 9, 42-42^{v}, 86) dans la terre, chaque roue de support (11, 54, 100) étant connectée à l'un ou plusieurs desdits organes de travail (8, 9, 42-42^{v}, 86), des éléments élastiques (20-20^{v}, 84) étant placés entre lesdits organes de travail (8, 9, 42-42^{v}, 86) et un axe (12, 13, 44-47, 87) sur lequel les organes de travail (8, 9, 42-42^{v}, 86) peuvent tourner, lesdits éléments élastiques (20-20^{v}, 84) ayant un effet de commande et agissant pour guider lesdits organes de travail (8, 9, 42-42^{v}, 86) dans un état d'équilibre, **caractérisée en ce qu'**une partie de connexion flexible (10) agit directement ou indirectement sur lesdites roues de support (11, 54, 100), **en ce que** les organes de travail (8, 9, 42-42^{v}, 86) sont directement ou indirectement interconnectés au moyen de ladite partie de connexion flexible allongée (10) pour transmettre le mouvement et distribuer la force de l'un desdits organes de travail (8, 9, 42-42^{v}, 86) à un autre desdits organes de travail (8, 9, 42-42^{v}, 86), de sorte que lorsque l'un desdits organes de travail (8, 9, 42-42^{v}, 86) se déplace depuis une position initiale dans une direction sous l'action d'une force, un autre desdits organes de travail (8, 9, 42-42^{v}, 86) se déplace dans une autre direction sous l'action de ladite force.

2. Machine agricole selon la revendication 1, dans laquelle la partie de connexion flexible (10), à son extrémité respective, est connectée de manière rigide ou de manière réglable à la partie châssis (2-2^{v}).

3. Machine agricole selon la revendication 1 ou 2, dans laquelle la partie de connexion flexible (10), à son extrémité respective, est connectée à un organe de force réglable (25), tel qu'un vérin hydraulique ou un ressort.

4. Machine agricole selon l'une quelconque des revendications précédentes, dans laquelle la partie de connexion flexible (10) comprend une corde, un câble en acier, un câble en fibre de carbone, une chaîne ou une chaîne-câble.

5. Machine agricole selon la revendication 4, dans laquelle un élément de guidage (28, 50, 50^{v}) sous la forme d'une poulie (28, 50, 50^{v}), sur laquelle est montée la partie de connexion flexible (10), est placée sur lesdits organes de travail (8, 9, 42-42^{v}, 86).

6. Machine agricole selon la revendication 5, dans laquelle deux organes de travail ou plus (42) placés sur des axes respectifs (44, 47) interagissent au moyen de la partie de connexion flexible (10) montée sur des éléments de guidage (50), de sorte que lorsque l'on fait tourner un organe de travail (42) dans un sens, les autres organes de travail tournent dans l'autre sens.

7. Machine agricole selon l'une quelconque des revendications précédentes, dans laquelle la partie châssis (2-2^{v}) comporte un cadre (2-2^{v}) qui comprend ledit au moins un axe (12, 13, 44-47).

8. Machine agricole selon la revendication 7, dans laquelle deux organes de travail (8, 9) placés sur des axes respectifs (12, 13) sont interconnectés de manière articulée au moyen d'un hauban de liaison (22).

9. Machine agricole selon la revendication 8, dans laquelle lesdits deux organes de travail (8, 9) placés sur des axes respectifs (12, 13) sont également, de préférence au moyen d'un hauban de liaison (23), interconnectés de manière articulée à une roue (11) qui est placée sur un troisième axe (21) qui s'étend essentiellement parallèlement aux axes respectifs (12, 13).

10. Machine agricole selon l'une quelconque des revendications précédentes, dans laquelle l'organe de travail comprend une jambe (42^{v} ; 98) agencée à rotation sur l'axe (44^{v}), grâce à quoi un organe cultivateur (51, 53 ; 84, 86) est connecté de manière articulée à la jambe (42^{v} ; 98) à l'extrémité de la jambe (42^{v} ; 98) qui est à l'opposé dudit axe (44^{v}), et un hauban parallèle (57 ; 92), à une première extrémité (55 ; 91), étant connecté de manière articulée à l'organe cultivateur (51, 53 ; 84, 86) et, à une deuxième extrémité (59 ; 93), est connecté de manière articulée à l'axe (44^{v}).

11. Machine agricole selon la revendication 10, dans laquelle un tube d'ensemencement (53) est solidement connecté à l'organe cultivateur (51) et connecté de manière articulée au hauban parallèle (57) à la première extrémité (55) du hauban parallèle (57), et où un levier (61) est solidement connecté à l'axe (44^{v}) et connecté de manière articulée au hauban parallèle (57) à la deuxième extrémité (59) du hauban parallèle (57).

12. Machine agricole selon la revendication 11, dans laquelle une roue de support (54^{v}) est agencée de manière réglable sur le tube d'ensemencement (53).

13. Machine agricole selon l'une quelconque des revendications 1 à 7, dans laquelle l'axe de rotation de la roue (54) est disposé selon un angle oblique (α) par rapport à la direction de déplacement (P) de la machine agricole (1), de sorte que la roue (54) roule en formant un angle avec la direction de déplacement (P).

14. Machine agricole selon la revendication 13, dans laquelle un organe de travail (42) est de conception asymétrique par rapport à la direction de déplacement (P), de sorte que l'organe de travail (42) produit un talus (B) sur un côté du sillon (F) formé dans le sol par l'organe de travail (42), et où la roue (54) est agencée de manière à niveler le talus (B) et à re-remplir le sillon (F).

15. Machine agricole selon l'une quelconque des revendications précédentes, dans laquelle les éléments élastiques (20-20^{v}) comprennent des éléments en caoutchouc en forme de barre qui sont placés entre l'axe (12, 13, 44-47) et un manchon (16, 17) qui est placé autour de l'axe (12, 13, 44-47) et qui supporte lesdits organes de travail (8, 9, 42-42^{v}), lesquels éléments en caoutchouc s'étendent parallèlement à l'axe (12, 13, 44-47).
